# EUROPÄISCHE PATENTANMELDUNG

(11) **EP 1 065 157 A1**
(43) Veröffentlichungstag der Anmeldung: **03.01.2001**
(21) Anmeldenummer: 00890196.9
(22) Anmeldetag: 26.06.2000
(51) Int. Cl.: B65G 15/08

(54) **Rohrgurtförderer**

(30) Priorität: 29.06.1999 AT 112699
(71) Anmelder: Binder & Co. Aktiengesellschaft, 8200 Gleisdorf (AT)
(72) Erfinder: Hinterholzer, Stefan, Dipl.-Ing., 8770 St. Michael (AT); Kessler, Franz, Dipl.-Ing. Dr.mont., 8700 Leoben (AT)
(74) Vertreter: Kliment, Peter

(57) **Zusammenfassung**

Rohrgurtförderer, insbesondere ein Rohrgurtförderer bei dem das endlos umlaufende Fördermittel (3), beispielsweise ein Fördergurt, zumindest teilweise im Inneren von ringförmig angebrachten Rollen (5), deren Achsen im wesentlichen quer zur Förderrichtung verlaufen, geführt und im wesentlichen zu einem Rohr geformt wird, wobei die Rückführung des Fördermittels (3) außerhalb des zum Rohr geformten Lasttrums erfolgt. Um einen Rohrgurtförderer vorzusehen, der keine zusätzlichen externen Stützrollen für die Rückführung des Leertrums benötigt und somit sowohl die Installation eines solchen Rohrgutförderer vereinfacht als auch dessen Lärmproduktion im Betrieb verringert, erfolgt die Rückführung des Leertrums (9) des Fördermittels (3) auf den oberen ringförmig angebrachten Tragrollen (5) aufliegend.

## Beschreibung

Die Erfindung bezieht sich auf einen Rohrgurtförderer, insbesondere auf einen Rohrgurtförderer bei dem das endlos umlaufende Fördermittel, zum Beispiel ein Fördergurt, im Inneren von ringförmig angebrachten Rollen, deren Achsen im wesentlichen quer zur Förderrichtung verlaufen, geführt und im wesentlichen zu einem Rohr geformt wird.

Um Fördergut, welches beispielsweise im Bergbau, anfällt, zwischen verschiedenen Orten zu transportieren, werden in der Praxis unter anderem Bandförderer eingesetzt.

Dabei hat sich herausgestellt, dass herkömmliche Bandförderer lediglich für den Transport auf geraden Strecken geeignet sind, da Kurven eine unterschiedliche Veränderung der Länge der beiden Seitenkanten des Förderbandes bedingen, was mit einem herkömmlichen, geraden Bandförderer nicht möglich ist.

Dieses Problem wird durch Verwendung eines Rohrgurtförderers gelöst.

Dabei wird ein Teil des Fördergurtes zu einem rohrartigen Förderband zusammengerollt, wodurch erstens die Möglichkeit geschaffen wird, auch gekrümmte Fördergurtwege zu bauen und zweitens ein Verschütten des Fördergutes verhindert wird, was insbesondere bei Schüttgütern ein in der Praxis sehr oft auftretendes Problem ist.

Die US 5 042 646 A und die US 4 526 272 A beschreiben solche Rohrgurtförderer. Der teilweise rohrförmige Querschnitt des Fördergurtes wird durch Anordnung desselben innerhalb von quer zur Förderrichtung ringförmig angeordneten Förderrollen erreicht. Die Rückführung des leeren Fördergutes erfolgt außerhalb der ringförmig angeordneten Tragrollen.

Problematisch bei den Rohrgurtförderern wie in der US 5 042 646 A und US 4 526 272 A beschrieben ist jedoch die Tatsache, dass die Rückführung des Leertrums (des unbelasteten Trums) unterhalb des Lasttrums erfolgt, dh. dass das Leertrum von unten an das Lasttrum herangeführt wird und dieses U-förmig teilweise umschließt.

Damit ergibt sich jedoch ein Bandlauf, der ähnlich einem gängigen Bandförderer ist. Das Lasttrum befindet sich oben und das Leertrum befindet sich unten. Zum Stützen des von unten an die ringförmig angebrachten Tragrollen herangeführten Leertrums, sind deshalb zusätzliche Stützrollen außerhalb an der Unterseite des Leertrums nötig. Diese Stützrollen erhöhen jedoch den technischen Aufwand bei der Installation eines solchen Rohrgurtförderers ganz erheblich. Zusätzlich tragen diese extern angeordneten zusätzlichen Stützrollen ganz wesentlich zur Lärmproduktion eines solchen Rohrgurtförderers bei.

Ziel der vorliegenden Erfindung ist es daher einen Rohrgurtförderer vorzusehen, der keine zusätzlichen externen Stützrollen für die Rückführung des Leertrums benötigt und somit sowohl die Installation eines solchen Rohrgutförderer vereinfacht als auch dessen Lärmproduktion im Betrieb verringert.

Dies wird erfindungsgemäß durch die kennzeichnenden Merkmale des Anspruchs 1 erreicht.

Durch die Rückführung des Leertrumes oberhalb des Lasttrumes kann sich das Leertrum im wesentlichen auf denselben Rollen abstützen wie das Lasttrum. Es sind keine zusätzlichen Stützrollen erforderlich.

Zur Feinjustierung und sicheren Führung sind lediglich Führungsrollen gemäß dem Kennzeichen des Anspruchs 2 vorgesehen, die jedoch sehr zart ausgeführt sein können und lediglich in geringer Anzahl und nur in Kurven erforderlich sind.

Gemäß dem kennzeichnenden Merkmal des Anspruchs 3 sind zusätzliche Führungsrollen an der Oberseite des Leertrums vorgesehen, um ein Abheben des Leertrums von den ringförmigen Tragrollen zu verhindern.

Im folgenden erfolgt nun eine detaillierte Beschreibung der Erfindung. Dabei zeigen:
- Fig.1: einen Aufriss eines erfindungsgemäßen Rohrgurtförderers
- Fig.2: eine Draufsicht auf einen erfindungsgemäßen Rohrgutförderer
- Fig.3: ein Detail der Streckenführung in teilweiser Schnittansicht
- Fig.4: einen Schnitt durch einen erfindungsgemäßen Rohrgurtförderer gemäß Linie A-A aus Fig.1
- Fig.5: einen Rohrgurtförderer mit horizontaler Kurvenführung
- Fig.6: einen Rohrgurtförderer mit vertikaler Kurvenführung
- Fig.7: einen Schnitt durch einen Rohrgurtförderer gemäß Linie B-B aus Fig.5
- Fig.8: einen Schnitt durch einen Rohrgurtförderer gemäß Linie CC aus Fig.6

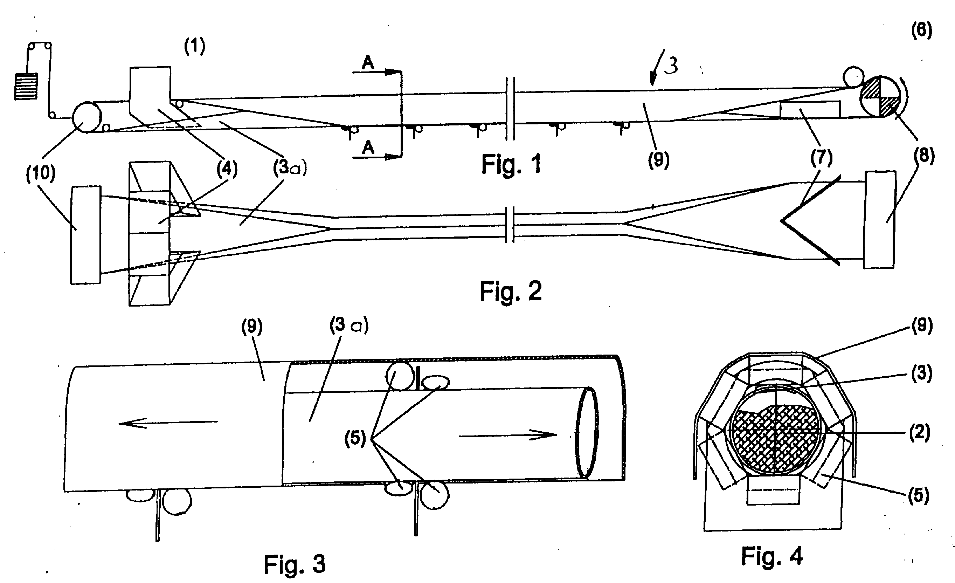

Fig.1 zeigt einen Aufriss eines erfindungsgemäßen Rohrgurtförderers. In Förderrichtung gesehen am Anfang des Rohrgurtförderers ist eine Aufgabestelle 1 vorgesehen. Im vorliegenden Fall handelt es sich dabei um eine Aufgabeschurre 4. Die Aufgabe kann jedoch auch durch einen Stetigförderer, wie beispielsweise einen Gurtförderer, eine Schwingrinne oder einen Schneckenförderer oder ähnlichem erfolgen. Das Einbringen des Förderguts 2 erfolgt seitlich in das umlaufende Fördermittel 3, welches in ein Leertrum 9 und ein Lasttrum 3a eingeteilt werden kann.

Fig.2 zeigt eine Draufsicht auf einen erfindungsgemäßen Rohrgurtförderers. Das Fördermittel 3 erstreckt sich dabei von einer Umlenktrommel 10 bis zu einer Umlenk/Antriebstrommel 8. Diese Trommeln 10,8 werden vom Fördermittel 3 jeweils eng anliegend umschlungen. Das Fördermittel 3 weist in diesem Bereich einen offenen, linienförmigen Querschnitt auf.

Durch ringförmig angeordnete Tragrollen 5 entlang der Förderstrecke, wie in Fig. 4 gezeigt, wird das Fördermittel 3 zu einem geschlossenen Querschnitt zusammengeschlagen. Der sich ergebende Querschnitt wird durch die Anordnung der Tragrollen 5 bestimmt und kann die Form eines Dreiecks, Vierecks, Vieleckes, Kreises oder ähnlichem annehmen. Dieser Abschnitt dient als Lasttrum. Das Fördergut 2 wird durch das sich schließende Fördermittel 3a umhüllt und in diesem entlang der Förderstrecke bis zur Abgabestelle 6 transportiert.

An der Abgabestelle 6 erfolgt wiederum der Übergang vom geschlossenen Querschnitt des Fördermittels 3a in einen offenen linienförmigen Querschnitt. Dabei wird das Fördergut 2 durch einen Abstreifer 7, beispielsweise einen Pflugabstreifer, seitlich ausgetragen. Anschließend wird das Fördermittel 3 durch die Umlenk/Antriebstrommel nach oben umgelenkt.

Das leere Fördermittel, hier als Leertrum 9 bezeichnet, wird bei der Rückführung zur Aufgabestelle 1 durch die oben liegenden ringförmig angebrachten Tragrollen 5 gestützt. Dabei geht der Querschnitt des Leertrums 9 von einem offenen linienförmigen Querschnitt an der Umlenk/Antriebstrommel 8 in einen U-förmigen Querschnitt (siehe Fig. 3) an den oberen ringförmigen angebrachten Tragrollen 5 entlang der Förderstrecke über. Vor dem Erreichen der Umlenktrommel 10 wird das Leertrum 9 vom U-förmigen Querschnitt wiederum in den offenen linienförmigen Querschnitt übergeführt, um anschließend an der Umlenktrommel 10, die im vorliegenden Fall auch als Spanntrommel fungiert, umgelenkt und wieder zu Aufgabestelle geführt zu werden.

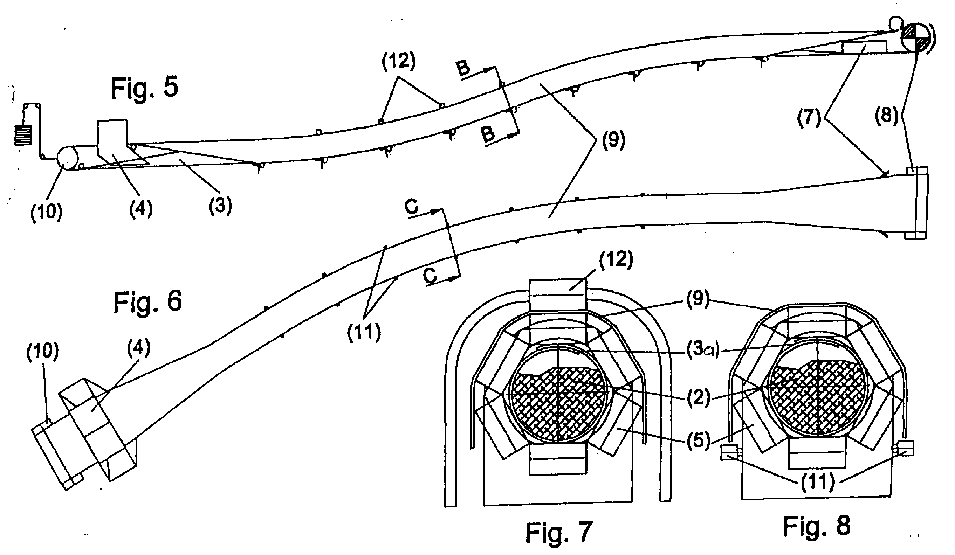

Wird der Rohrgurtförderer, wie in Fig.5 gezeigt, durch horizontale Kurven oder, wie in Fig. 6 gezeigt, durch vertikale Kurven oder durch eine Kombination aus horizontalen und vertikalen Kurven geführt, so ergeben sich für den geschlossenen Querschnitt des Fördermittels 3 durch die ringförmig entlang der Förderstrecke angebrachten Tragrollen 5 keinerlei Führungsprobleme.

Für das Leertrum 9 werden zur sicheren Führung im Bereich einer horizontalen Kurvenführung unter den beiden Kanten des Leertrums 9 Begrenzungsrollen 11 (siehe Fig.8) angeordnet, um ein seitliches Abrutschen des Leertrums 9 in der Horizontalkurve zu verhindern. In Bereichen mit stark gekrümmter vertikaler Kurvenführung wird an der Oberseite des Leertrums 9 eine zusätzliche Führungsrolle 12 angeordnet. Diese soll verhindern, dass das Fördermittel 3 von den ringförmig angeordneten Tragrollen 5 abhebt.

Das Anbringen von zusätzlichen Stützrollen für das Leertrum 9 entfällt beim erfindungsgemäßen Rohrgurtförderer.

## Patentansprüche

1. Rohrgurtförderer, insbesondere ein Rohrgurtförderer bei dem das endlos umlaufende Fördermittel (3), beispielsweise ein Fördergurt, zumindest teilweise im Inneren von ringförmig angebrachten Rollen (5), deren Achsen im wesentlichen quer zur Förderrichtung verlaufen, geführt und im wesentlichen zu einem Rohr geformt wird, wobei die Rückführung des Fördermittels (3) außerhalb des zum Rohr geformten Lasttrums erfolgt, **dadurch gekennzeichnet, daß** die Rückführung des Leertrums (9) des Fördermittels (3) auf den oberen ringförmig angebrachten Tragrollen (5) aufliegend erfolgt.

2. Rohrgurtförderer nach Anspruch 1, **dadurch gekennzeichnet, daß** unter den beiden Kanten Leertrums (9) des Fördermittels (3) Führungsrollen (11) angebracht sind, um ein seitliches Abrutschen des Fördermittels zu verhindern.

3. Rohrgurtförderer nach Anspruch 1 und 2, **dadurch gekennzeichnet, daß** an der Oberseite des Leertrums (9) zusätzliche Führungsrollen (12) angeordnet sind, um ein Abheben des Leertrums (9) von den ringförmig angeordneten Tragrollen (5) zu verhindern.

4. Rohrgurtförderer nach einem der Ansprüche 1 bis 3, **dadurch gekennzeichnet, daß** die Länge der ringförmigen angebrachten Tragrollen (5) unterschiedlich ist.

5. Rohrgurtförder nach einem der Ansprüche 1 bis 4, **dadurch gekennzeichnet, daß** das Leertrum (9) im Bereich der Auflage auf den oberen ringförmig angebrachten Tragrollen (5), den rohrförmigen Teil des Fördergurtes (3) U-förmig umschließt.
